# FASCICULE DE BREVET EUROPEEN

(11) **EP 0 379 812 B1**
(45) Date de publication et mention de la délivrance du brevet: **10.02.1993**
(21) Numéro de dépôt: 89403057.6
(22) Date de dépôt: 07.11.1989
(51) Int. Cl.: F16L 41/02

(54) **Bloc de jonction et de raccordement entre canalisations souples en matériau élastomère, son procédé et son dispositif de fabrication**
Verbindungs- und Anschlussblock zwischen nachgiebigen, elastomerischen Leitungen, Verfahren und Vorrichtung zu seiner Herstellung
Connecting and joining block between pipelines made of soft and elastomeric material, process and device for manufacturing the same

(30) Priorité: 09.11.1988 FR 8814658
(43) Date de publication de la demande: 01.08.1990
(73) Titulaire: HUTCHINSON, F-75008 Paris (FR)
(72) Inventeur: Briet, Gilles, F-71130 Geugnon (FR)
(74) Mandataire: Ramey, Daniel

(56) Documents cités:
- EP-A- 0 277 058
- DE-A- 1 775 636
- DE-A- 2 026 489
- US-A- 3 570 534
- US-A- 3 736 955

## Description

L'invention concerne un bloc de jonction et de raccordement entre des canalisations souples en matériau élastomère tel que du caoutchouc, qui comprennent au moins deux canalisations principales et deux canalisations dérivées raccordées chacune à une canalisation principale. L'invention concerne également un procédé et un dispositif de fabrication de ce bloc de jonction et de raccordement.

Les canalisations souples qui sont utilisées dans l'industrie automobile, en particulier pour la constitution de circuits de fluide tels que des circuits de refroidissement, de chauffage et/ou de climatisation, sont fréquemment munies de dérivations, de raccordements ou de branchements permettant de relier un circuit à différents organes, ou de relier plusieurs circuits entre eux. Les canalisations souples de ces circuits suivent des trajets qui sont souvent sinueux, et doivent parfois être assemblées ou reliées entre elles, à la fois pour faciliter la manutention d'un ensemble de canalisations, et pour diminuer l'encombrement et accroître la fiabilité des circuits.

Dans les réalisations connues de circuits de refroidissement, de chauffage ou de climatisation pour véhicules automobiles, chaque circuit est réalisé à partir d'une canalisation principale sur laquelle une ou plusieurs canalisations dérivées sont raccordées, puis les canalisations principales peuvent être assemblées entre elles à l'aide de pièces en matière plastique, ou bien par réalisation d'un surmoulage d'élastomère sur des parties des canalisations principales qui ne comprennent pas les raccordements aux canalisations dérivées. Il faut donc raccorder tout d'abord une à une les diverses canalisations dérivées sur les canalisations principales, puis assembler entre elles les canalisations principales, ce qui est relativement long, donc coûteux, et ne garantit pas une disposition relative et rigoureuse des diverses canalisations les unes par rapport aux autres.

Le document DE-A-1 775 636 décrit un dispositif de raccordement et de dérivation, comprenant essentiellement deux pièces parallèles en forme de T qui sont chacune montée sur une canalisation principale et raccordée à une canalisation dérivée. Un boîtier métallique ou en matière plastique peut être disposé autour de ces deux pièces en forme de T et rempli d'une matière thermiquement isolante en mousse. Ce dispositif connu présente donc les mêmes inconvénients que précités.

L'invention a notamment pour but de remédier à ces inconvénients de la technique connue.

Elle propose pour cela un bloc de jonction et de raccordement entre canalisations souples en matériau élastomère tel que du caoutchouc, comprenant au moins deux canalisations principales parallèles et deux canalisations dérivées raccordées chacune à une canalisation principale, les axes des raccordements des canalisations dérivées étant orientés en oblique par rapport au plan défini par les axes des canalisations principales, caractérisé en ce que ce bloc est en matériau élastomère moulé d'une pièce autour des canalisations principales et de leurs raccordements aux canalisations dérivées.

Grâce au fait que le bloc de jonction et de raccordement selon l'invention est moulé en une seule pièce autour des canalisations principales et de leurs raccordements aux canalisations dérivées, on peut réaliser en une seule opération de moulage aussi bien les raccordements des canalisations principales aux canalisations dérivées correspondantes, que la jonction ou liaison mécanique entre les deux canalisations principales.

Le fait que les axes des canalisations dérivées aient une orientation relative déterminée par rapport au plan des canalisations principales, permet de réaliser ce moulage de façon simple et peu coûteuse.

Selon une autre caractéristique de l'invention, les axes de raccordement des canalisations dérivées, s'étendant d'un même côté du plan passant par les axes des canalisations principales, sont décalés l'un par rapport à l'autre.

Cette disposition relative des canalisations dérivées facilite également le moulage et le démoulage du bloc selon l'invention.

Selon encore une autre caractéristique de l'invention, les axes des canalisations dérivées sont parallèles entre eux (au moins dans leurs zones de raccordement aux canalisations principales).

Cette caractéristique de structure facilite également la fabrication du bloc selon l'invention.

Plus précisément, l'axe d'au moins une canalisation dérivée forme un angle supérieur ou égal à 90° avec un plan tangent aux périphéries des canalisations principales et s'étendant d'un côté d'une canalisation principale au côté opposé de l'autre canalisation principale, ce plan correspondant à la trace d'une surface de joint entre des parties de moule utilisées pour la fabrication dudit bloc.

Comme cela sera confirmé ci-dessous, cette disposition facilite également la fabrication du bloc, en permettant d'utiliser un moule réalisé essentiellement en deux parties.

Selon une variante de réalisation, chaque canalisation principale est raccordée à deux canalisations dérivées, et les deux canalisations dérivées raccordées à la même canalisation principale sont axialement alignées.

Le bloc comprend également des manchons de renforcement en matériau élastomère, qui sont moulés autour des raccordements des canalisations dérivées aux canalisations principales.

L'invention propose également un procédé de jonction et de raccordement entre des canalisations souples en matériau élastomère tel que du caoutchouc, comprenant au moins deux canalisations principales et deux canalisations dérivées raccordées chacune à une canalisation principale, le procédé étant caractérisé en ce qu'il consiste à mouler en une seule opération un bloc du matériau élastomère précité autour desdites canalisations principales et de leurs raccordements aux canalisations dérivées, par injection du matériau élastomère dans un volume délimité essentiellement par deux parties de moules réunies selon une surface de joint à profil sensiblement en Z formée par un premier plan de joint défini par l'axe d'une canalisation principale et l'axe de la canalisation dérivée correspondante, un deuxième plan de joint défini par l'axe de l'autre canalisation principale et l'axe de sa canalisation dérivée, et un troisième plan de joint reliant les deux premiers et tangent aux périphéries des canalisations principales.

Ce procédé de fabrication permet de réaliser en une seule opération les raccordements des canalisations principales à leurs canalisations dérivées et la jonction ou le jumelage des canalisations principales entre elles.

Le procédé est également caractérisé en ce qu'il consiste à mouler, en même temps que ledit bloc, des manchons de renforcement autour des extrémités des canalisations dérivées.

L'invention concerne également un dispositif de fabrication d'un bloc de jonction et de raccordement selon l'invention, caractérisé en ce qu'il comprend deux parties de moules délimitant entre elles un volume de moulage à la forme du bloc à obtenir et raccordées entre elles selon une surface de joint sensiblement en Z, formée par un premier plan de joint passant par l'axe d'une canalisation principale et l'axe d'une canalisation dérivée qui lui est raccordée, un deuxième plan de joint passant par l'axe de l'autre canalisation principale et l'axe de sa canalisation dérivée, et un troisième plan de joint reliant les deux premiers et tangent aux périphéries des canalisations principales.

Le moulage et le démoulage du bloc selon l'invention sont, grâce à ce dispositif, simples et peu coûteux.

L'invention sera mieux comprise et d'autres détails, caractéristiques et avantages de celle-ci apparaîtront plus clairement à la lecture de la description explicative qui suit, faite en référence aux dessins annexés, dans lesquels :
la figure 1 est une vue schématique de côté du dispositif selon l'invention ;
La figure 2 est une vue schématique en perspective de ce dispositif ;
la figure 3 est une vue de dessous du dispositif de la figure 1 ;
la figure 4 est une vue correspondant à la figure 3, mais représentant une variante de réalisation du dispositif selon l'invention.

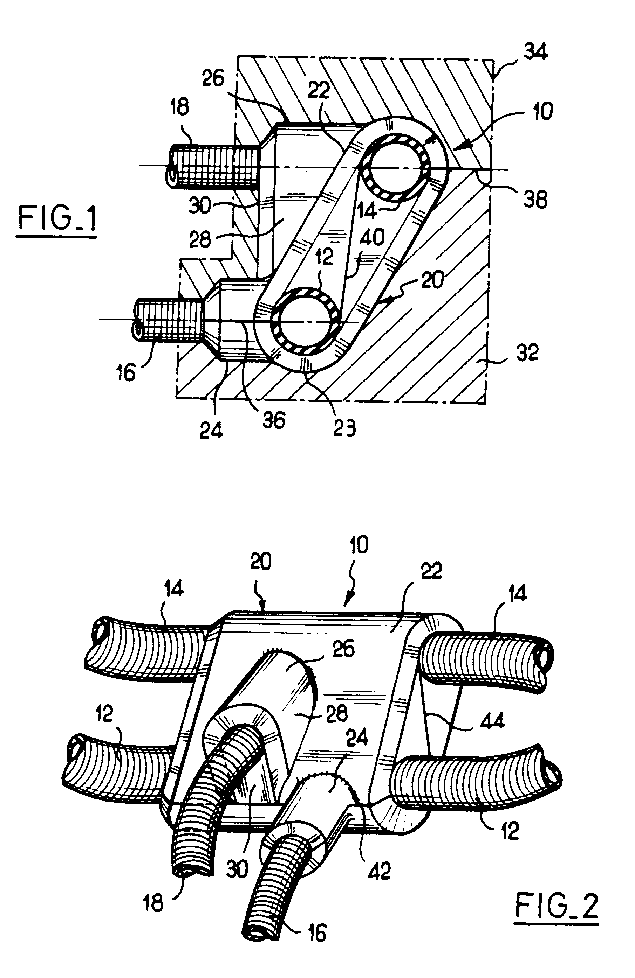

On se réfère d'abord aux figures 1 à 3, qui représentent schématiquement un dispositif de liaison et de raccordement selon l'invention entre deux canalisations principales 12 et 14 sur chacune desquelles est branchée une canalisation dérivée 16,18 respectivement.

Chaque canalisation 12,14,16,18 est en matériau élastomère tel que du caoutchouc et comprend éventuellement une armature textile interne.

Le bloc 10 est réalisé dans le même matériau élastomère que les canalisations et comprend essentiellement un corps 20 à deux faces planes parallèles raccordées entre elles à leurs extrémités par des demi-cylindres à section circulaire. Ce corps 20 est traversé parallèlement à ses grandes faces planes par les canalisations principales 12 et 14 et comprend, sur l'une 22 de ses faces planes, deux saillies 24 et 26 entourant les extrémités des canalisations dérivées 16 et 18 raccordées aux canalisations principales 12 et 14.

La saillie 24 de raccordement de la canalisation dérivée 16 à la canalisation principale 12 a la forme d'un manchon cylindrique 24 dont une extrémité se rattache à la face plane 22 du corps 10 ainsi qu'à l'un de ses bords semi-cylindriques 23, et dont l'autre extrémité rattachée à la canalisation dérivée 16 est de forme tronconique.

L'autre saillie 26 est de forme sensiblement semi-cylindrique en partie supérieure et prolongée vers le bas, dans les figures 1 et 2, par des faces planes parallèles 28 ayant une surface extérieure sensiblement triangulaire.

La face frontale d'extrémité 30 de cette saillie, située sous la canalisation dérivée 18, est sensiblement plane.

Dans l'exemple de réalisation représenté, les axes des canalisations dérivées 16 et 18 sont parallèles entre eux dans leurs zones de raccordement aux canalisations principales 12, 14 et coupent les axes de ces canalisations, en étant orientés sensiblement à angle droit par rapport à ces derniers. Par ailleurs, le plan passant par les axes des canalisations principales 12 et 14 est incliné à environ 45°, dans l'exemple représenté, par rapport aux axes des canalisations dérivées 16, 18.

De plus, les saillies 24, 26 de raccordement aux canalisations dérivées 16, 18, sont décalées transversalement comme on le voit bien en figure 2, les axes des canalisations 16, 18 ne se trouvant pas dans un même plan perpendiculaire au plan défini par les axes des canalisations principales 12 et 14.

Cette disposition relative des diverses canalisations permet une fabrication simple et rapide du bloc 10 par moulage, comme on va le voir dans ce qui suit.

Le dispositif de fabrication du bloc 10 selon l'invention comprend essentiellement deux parties de moules 32 et 34, dont les contours ont été représentés en trait fantôme en figure 1, qui se raccordent l'une à l'autre, de façon à délimiter entre elles un volume à la forme du bloc 10 qui vient d'être décrit, selon une surface de joint sensiblement en Z comprenant un premier plan de joint 36 passant par l'axe de la canalisation principale 12 et l'axe de sa canalisation dérivée 16, un deuxième plan de joint 38 passant par l'axe de la canalisation principale 14 et par l'axe de sa canalisation dérivée 18, et un troisième plan de joint 40 qui est tangent aux surfaces extérieures des canalisations principales 12 et 14. Plus précisément, le premier plan de joint 36 traverse diamètralement le logement de la canalisation principale 12 tandis que le deuxième plan de joint 38 traverse diamètralement le logement de l'autre canalisation principale 14, et que le troisième plan de joint 40 relie, à leurs extrémités, le premier et le deuxième plan de joint.

Dans l'exemple de réalisation représenté en figure 1, le troisième plan de joint 40 est ainsi sensiblement perpendiculaire au premier et au deuxième plan de joint 36, 38. Il est nécessaire, pour des questions de démoulage, que l'angle formé par le troisième plan de joint 40 avec le premier plan de joint 36 et avec le deuxième plan de joint 38 soit supérieur ou égal à 90°.

Les parties de moule 32 et 34 comprennent bien entendu des orifices de passage des canalisations principales 12 et 14 et des canalisations dérivées 16 et 18. Le branchement proprement dit de chaque canalisation dérivée sur sa canalisation principale est réalisé par des moyens classiques, par exemple une pièce tubulaire de liaison sur une extrémité de laquelle est montée la canalisation dérivée et dont l'autre extrémité est introduite à étanchéité dans un orifice de la canalisation principale, ou est en forme de T. Ces moyens sont bien connus de l'homme du métier et n'ont pas à être décrits ici plus en détail.

Pour fabriquer le bloc 10 selon l'invention, on procède de la façon suivante :
les canalisations principales 12 et 14 sur lesquelles sont branchées les canalisations dérivées 16 et 18 sont placées dans leurs logements de l'une des parties de moules 32, 34, après quoi l'autre partie de moule est placée sur la première pour fermer le moule. Il suffit ensuite d'injecter dans la cavité de moulage un matériau élastomère approprié (de préférence le même que celui constituant les canalisations) pour obtenir, après vulcanisation ou réticulation du matériau élastomère, un bloc 10 qui assure l'étanchéité et le maintien des raccordements entre les canalisations principales et les canalisations dérivées, et qui assure également la liaison ou le jumelage des deux canalisations principales 12 et 14. Le démoulage est réalisé simplement, par séparation des parties de moule 32 et 34 par translation dans une direction perpendiculaire aux axes des canalisations principales et aux axes des canalisations dérivées. Pour le démoulage de la face d'extrémité plane 30 de la saillie 26, on peut prévoir, dans la partie de moule 34, une partie amovible qui s'extrait par exemple vers le bas après écartement de l'autre partie 32 de moule, ou qui s'extrait parallèlement à l'axe de la canalisation dérivée 18, ou encore une saillie rectangulaire formée sur la partie de moule 32.

On voit sur la vue en perspective de la figure 2, la trace 42 du premier plan de joint 36, et la trace 44 du troisième plan de joint 40.

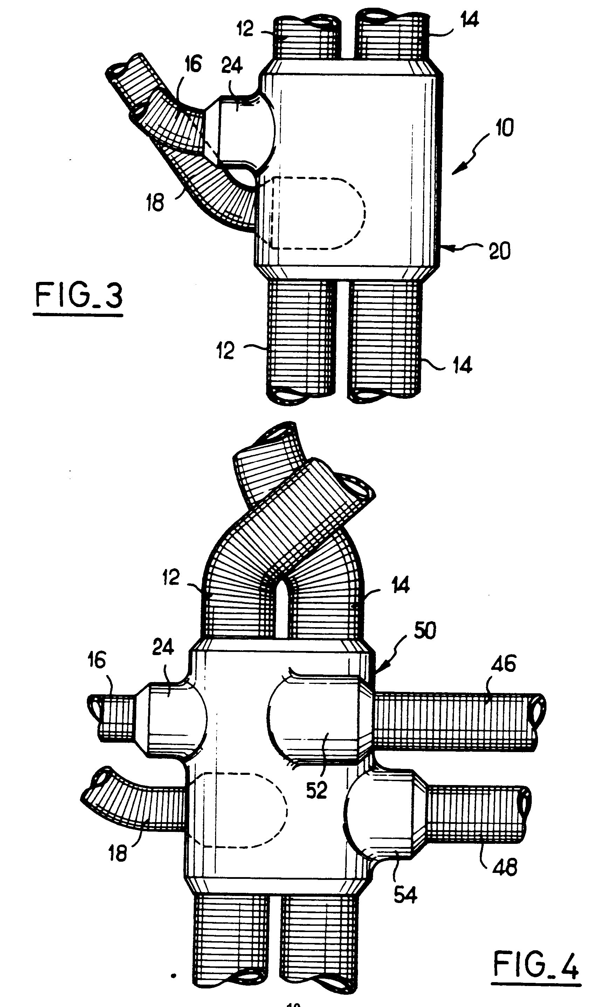

En figure 4, on a représenté une variante de réalisation de l'invention, dans laquelle chaque canalisation principale 12, 14 est reliée à une première canalisation dérivée 16, 18 respectivement, comme dans le mode de réalisation des figures 1 à 3, et également à une deuxième canalisation dérivée 46, 48 respectivement.

Dans cette variante, les canalisations dérivées 16, 46 de la canalisation principale 12 sont axialement alignées, et les canalisations dérivées 18, 48 de l'autre canalisation principale 14 sont aussi axialement alignées. Il en résulte que le bloc 50 de jonction et de raccordement selon l'invention a une forme qui se déduit de celle de la figure 1 par complément de symétrie par rapport au centre du bloc 10. En d'autres termes, la saillie 52 associée à la canalisation dérivée 46 a exactement la forme de la saillie 26 associée à la canalisation 18, mais est formée sur l'autre face plane du corps 50 en étant retournée par rapport à la saillie 26. De même, la saillie 54 associée à la canalisation dérivée 48 a exactement la forme de la saillie 24 associée à la canalisation 16 et est axialement alignée avec la canalisation dérivée 18.

Dans les exemples représentés aux dessins, les axes des saillies de raccordement 24, 26, 52, 54 formés sur les blocs 10, 50 sont perpendiculaires aux axes des canalisations principales 12, 14. Ils pourraient également être obliques par rapport aux axes des canalisations principales, par exemple pour des raisons d'encombrement dans le compartiment moteur d'un véhicule automobile.

## Revendications

1. Bloc de jonction et de raccordement entre canalisations souples en matériau élastomère tel que du caoutchouc, comprenant au moins deux canalisations principales parallèles (12,14) et deux canalisations dérivées (16,18) raccordées chacune à une canalisation principale, les axes des raccordements des canalisations dérivées (16,18) étant orientés en oblique par rapport au plan défini par les axes des canalisations principales (12,14), caractérisé en ce qu'il est en matériau élastomère moulé d'une pièce autour des canalisations principales (12,14) et de leurs raccordements aux canalisations dérivées (16,18).

2. Bloc selon la revendication 1, caractérisé en ce que les axes des raccordements des canalisations dérivées (16,18), s'étendant d'un même côté du plan passant par les axes des canalisations principales, sont décalés l'un par rapport à l'autre.

3. Bloc selon la revendication 1, caractérisé en ce que les axes des raccordements des canalisations dérivées (16,18) sont parallèles entre eux.

4. Bloc selon l'une des revendications 1 à 3, caractérisé en ce que l'axe d'au moins une canalisation dérivée (16) forme un angle supérieur ou égal à 90° avec un plan (40) tangent aux périphéries des canalisations principales (12,14) et s'étendant d'un côté d'une canalisation principale au côté opposé de l'autre canalisation principale, ce plan correspondant à une surface de joint entre parties de moule (32,34) utilisées pour la fabrication desdits blocs.

5. Bloc selon l'une des revendications 1 à 4, caractérisé en ce que chaque canalisation principale est raccordée à deux canalisations dérivées (16, 46 ; 18, 48).

6. Bloc selon la revendication 5, caractérisé en ce que les canalisations dérivées (16, 46 ; 18, 48) raccordées à une même canalisation principale sont axialement alignées.

7. Bloc selon l'une des revendications 1 à 6, caractérisé en ce qu'il comprend des saillies ou manchons (24, 26, 52, 54) de renforcement en matériau élastomère, moulés autour des raccordements des canalisations dérivées sur les canalisations principales.

8. Procédé de jonction et de raccordement entre canalisations souples en matériau élastomère tel que du caoutchouc, comprenant au moins deux canalisations principales (12,14) et deux canalisations dérivées (16,18) raccordées chacune à une canalisation principale, caractérisé en ce qu'il consiste à mouler en une seule opération un bloc (10,50) du matériau élastomère précité autour desdites canalisations principales et de leurs raccordements aux canalisations dérivées, par injection du matériau élastomère dans un volume délimité essentiellement par deux parties de moules (32,34) réunies selon une surface de joint à profil sensiblement en Z, formée par un premier plan de joint (36) défini par l'axe d'une canalisation principale (12) et l'axe de sa canalisation dérivée (16), un deuxième plan de joint (38) défini par l'axe de l'autre canalisation principale (14) et l'axe de sa canalisation dérivée (18), et un troisième plan de joint (40) reliant les deux premiers et tangent aux périphéries des canalisations principales (12,14).

9. Procédé selon la revendication 8, caractérisé en ce que le troisième plan de joint (40) fait un angle supérieur ou égal à 90° avec les deux autres plans de joint (36,38).

10. Procédé selon la revendication 8 ou 9, caractérisé en ce que les premier et deuxième plans de joint (36,38) sont parallèles.

11. Procédé selon l'une des revendications 8 à 10, caractérisé en ce qu'il consiste à mouler, en même temps que ledit bloc (10,50) des saillies ou manchons (24,26,52,54) de renforcement autour des extrémités des canalisations dérivées.

12. Procédé selon l'une des revendications 8 à 11, caractérisé en ce qu'il consiste à mouler le bloc (50) autour de deux canalisations principales (12,14) et de leurs raccordements à quatre canalisations dérivées (16,18,46,48), deux canalisations dérivées (16,46 ;18,48) raccordées à la même canalisation principale étant axialement alignées et s'étendant de part et d'autre respectivement de la canalisation principale.

13. Procédé selon l'une des revendications 8 à 12, caractérisé en ce qu'il consiste à démouler le bloc dans une direction sensiblement perpendiculaire aux premier et deuxième plans de joint (36,38).

14. Dispositif de fabrication d'un bloc de jonction et de raccordement selon l'une des revendications 1 à 7, caractérisé en ce qu'il comprend deux parties de moules (32,34) délimitant entre elles un volume de moulage à la forme du bloc à obtenir et raccordées entre elles selon une surface de joint sensiblement en Z, formée par un premier plan de joint (36) passant par l'axe d'une canalisation principale (12) et l'axe de sa canalisation dérivée (16), un deuxième plan de joint (38) passant par l'axe de l'autre canalisation principale (14) et l'axe de sa canalisation dérivée (18) et un troisième plan de joint (40) reliant les deux premiers et tangent aux périphéries des canalisations principales.

15. Dispositif selon la revendication 14, caractérisé en ce que les premier et deuxième plans de joint (36,38) s'étendent d'un côté et de l'autre respectivement du plan passant par les axes et canalisations principales (12,14) et traversent diamètralement les orifices de passage de ces canalisations.

16. Dispositif selon la revendication 14 ou 15, caractérisé en ce que le troisième plan de joint (40) fait un angle supérieur ou égal à 90° avec les premier et deuxième plans de joint (36,38).

## Claims

1. A joining and connecting block between flexible ducts made from an elastomer material such as rubber, comprising at least two parallel main ducts (12, 14) and two branch ducts (16, 18) each connected to a main duct, the axes of the branch duct connections being oriented obliquely with respect to the plane defined by the axes of the main ducts (12, 14), which block is characterized in that it is made from an elastomer material molded in a single piece about the main ducts (12, 14) and their connections to the branch ducts (16, 18).

2. A block according to claim 1, characterized in that the axes of the branch duct connections extending on the same side of the plane passing through the axes of the main ducts, are offset with respect to each other.

3. A block according to claim 1, characterized in that the axes of the branch duct connections are parallel to each other.

4. A block according to any one of claims 1 to 3, characterized in that the axis of at least one branch duct (16) forms an angle greater than or equal to 90° with a plane (40) tangential to the peripheries of the main ducts (12, 14) and extending from one side of one main duct to the opposite side of the other main duct, this plane corresponding to a joining surface between mold parts (32, 34) used for manufacturing said blocks.

5. A block according to any one of claims 1 to 4, characterized in that each main duct is connected to two branch ducts (16, 46; 18, 48).

6. A block according to claim 5, characterized in that the branch ducts (16, 46; 18, 48) connected to the same main duct are axially aligned.

7. A block according to any one of claims 1 to 6, characterized in that it comprises elastomer material reinforcement projections or sleeves (24, 26, 52, 54) which are molded around the connections of the branch ducts to the main ducts.

8. A method of joining and connecting between flexible ducts made from an elastomer material such as rubber, the ducts comprising at least two main ducts (12, 14) and two branch ducts (16, 18) each connected to one of the main ducts, which method is characterized in that is consists in molding, in a single operation, a block (10, 50) of said elastomer material around said main ducts and their connections to the branch ducts, by injecting the elastomer material in a volume defined essentially by two mold parts (32, 34) joined together along a joining surface having a profile substantially in the form of a Z formed by a first joint plane (36) defined by the axis of a main duct (12) and the axis of its branch duct (16), a second joint plane (38) defined by the axis of the other main duct (14) and the axis of its branch duct (18) and a third joint plane (40) connecting the first two together and being tangential to the peripheries of the main ducts (12, 14).

9. A method according to claim 8, characterized in that said third joint plane (40) forms an angle greater than or equal to 90° with the other two joint planes (36, 38).

10. A method according to claim 8 or 9, characterized in that said first and second joint planes (36, 38) are parallel.

11. A method according to any one of claims 8 to 10, characterized in that it consists in molding, at the same time as the block (10, 50), reinforcement projections or sleeves (24, 26, 52, 54) around the ends of the branch ducts.

12. A method according to any one of claims 8 to 11, characterized in that it consists in molding the block (50) about two main ducts (12, 14) and their connections to four branch ducts (16, 18, 46, 48), two branch ducts (16, 46; 18, 48) connected to the same main duct being axially aligned and extending on respective sides of the main duct.

13. A method according to any one of claims 8 to 12, characterized in that it consists in removing the block from the mold in a direction substantially perpendicular to the first and second joint planes (36, 38).

14. A device for manufacturing a joining and connecting block as claimed in any one of claims 1 to 7, characterized in that it comprises two mold parts (32, 34) defining therebetween a molding volume in the form of the block to be obtained and connected together along a joining surface having substantially a Z shape, formed by a first joint plane (36) passing through the axis of one main duct (12) and the axis of its branch duct (16), a second joint plane (38) passing through the axis of the other main duct (14) and the axis of its branch duct (18), and a third joint plane (40) joigning the first two together and being tangential to the peripheries of the main ducts.

15. A device according to claim 14, characterized in that said first and second joint planes (36, 38) extend on respective sides of the plane passing through the axes of the main ducts (12, 14) and pass diametrically through the passage orifices of these ducts.

16. A device according to claim 14 or 15, characterized in that said third joint plane (40) forms an angle greater than or equal to 90° with said first and second joint planes (36, 38).

## Patentansprüche

1. Block zur Verbindung zwischen und zum Anschluß von biegsamen Rohrleitungen aus einem Elastomermaterial, wie Kautschuk, der zumindest zwei, im wesentlichen parallele Hauptrohrleitungen (12, 14) und zwei Ableitungsröhren (16, 18) aufweist, von denen jede mit einer Hauptrohrleitung verbunden ist, wobei die Verbindungsachsen der Ableitungsröhren (16, 18) bezüglich der von den Achsen der Hauptrohrleitungen (12, 14) festgelegten Ebene geneigt sind, **dadurch gekennzeichnet, daß** er aus einem elastomeren Material besteht, das einstückig um die Hauptrohrleitungen (12, 14) und deren Verbindungen zu den Ableitungsröhren (16, 18) geformt ist.

2. Block nach Anspruch 1, **dadurch gekennzeichnet, daß** die Verbindungsachsen der Ableitungsröhren (16, 18), die sich entlang einer Seite derselben Ebene erstrecken, welche von den Achsen der Hauptrohrleitungen durchquert wird, gegeneinander versetzt sind.

3. Block nach Anspruch 1, **dadurch gekennzeichnet, daß** die Verbindungsachsen der Ableitungsröhren (16, 18) zueinander parallel sind.

4. Block nach einem der Ansprüche 1 bis 3, **dadurch gekennzeichnet, daß** die Achse zumindest einer Ableitungsröhre (16) mit einer Ebene (40), die den Umfang der Hauptrohrleitungen (12, 14) tangiert und sich von einer Seite einer Hauptrohrleitung auf die gegenüberliegende Seite der anderen Hauptrohrleitung erstreckt, wobei diese Ebene einer Verbindungsoberfläche zwischen den zur Herstellung dieses Blocks verwendeten Formteilen (3 2, 34) entspricht, einen Winkel einschließt, der größer oder gleich 90° ist.

5. Block nach einem der Ansprüche 1 bis 4, **dadurch gekennzeichnet, daß** jede Hauptrohrleitung mit zwei Ableitungsröhren (16, 46; 18, 48) verbunden ist.

6. Block nach Anspruch 5, **dadurch gekennzeichnet, daß** die mit ihrer Hauptrohrleitung verbundenen Ableitungsröhren (16, 46; 18, 48) axial ausgerichtet sind.

7. Block nach einem der Ansprüche 1 bis 6, **dadurch gekennzeichnet, daß** er um die Verbindung der Ableitungsröhren mit den Hauptleitungsröhren herum geformte Verstärkungs-Vorsprünge oder Muffen (24, 26, 52, 54) aus Elastomermaterial aufweist.

8. Verfahren zum Verbinden und Anschließen von biegsamen Rohrleitungen aus Elastomermaterial, wie Kautschuk, welches zumindest zwei Hauptrohrleitungen (12, 14) und zwei Ableitungsröhren (16, 18) aufweist, von denen jede mit einer Hauptrohrleitung verbunden ist, **dadurch gekennzeichnet, daß** es durch Einspritzen eines Elastomermaterials in ein Volumen, das im wesentlichen von zwei Formteilen (32, 34) begrenzt wird, die entlang einer im wesentlichen als Z-Profil ausgebildeten Verbindungsoberfläche vereinigt sind, welche von einer ersten, durch eine Achse einer Hauptrohrleitung (12) und die Achse ihrer Ableitungsröhre (16) festgelegte Verbindungsoberfläche (36), von einer zweiten, durch die Achse der anderen Hauptrohrleitung (14) und die Achse ihrer Ableitungsröhre (18) festgelegte Verbindungsoberfläche (38) und von einer dritten Verbindungsoberfläche (40) gebildet wird, welche die beiden ersten verbindet und den Umfang der Hauptrohrleitungen (12, 14) tangiert, in einem Arbeitsgang das Formen eines Blocks (10, 50) aus dem obengenannten Elastomermaterial um die Hauptrohrleitungen und ihre Verbindungen zu den Ableitungsröhren aufweist.

9. Verfahren nach Anspruch 8, **dadurch gekennzeichnet, daß** die dritte Verbindungsoberfläche (40) mit den beiden anderen Verbindungsober-Mächen (36, 38) einen Winkel einschließt, der größer oder gleich 90° ist.

10. Verfahren nach Anspruch 8 oder 9, **dadurch gekennzeichnet, daß** die erste und zweite Verbindungsebene (36, 38) parallel sind.

11. Verfahren nach einem der Ansprüche 8 bis 10, **dadurch gekennzeichnet, daß** es das gleichzeitige Formen des Blocks (10, 50) und der Vorsprünge oder Muffen zur Verstärkung (24, 26, 52, 54) um die Enden der Ableitungsröhren aufweist.

12. Verfahren nach einem der Ansprüche 8 bis 11, **dadurch gekennzeichnet, daß** es das Formen des Blocks (50) um die beiden Hauptrohrleitungen (12, 14) und ihren Verbindungen zu vier Ableitungsröhren (16, 18, 46, 48) aufweist, von denen zwei Ableitungsröhren (16, 46; 18, 48) mit derselben Hauptrohrleitung verbunden sind, axial ausgerichtet und bezüglich der Hauptrohrleitung an beiden Seiten ausgebildet sind.

13. Verfahren nach einem der Ansprüche 8 bis 12, **dadurch gekennzeichnet, daß** es das Entformen des Blocks in einer Richtung aufweist, die im wesentlichen normal auf die erste und zweite Verbindungsebene (36, 38) steht.

14. Vorrichtung zur Herstellung eines Blocks zum Verbinden und Anschließen nach einem der Ansprüche 1 bis 7, **dadurch gekennzeichnet, daß** sie zwei Formteile (32, 34) aufweist, die miteinander ein Formvolumen in der Form eines resultierenden Blocks begrenzen und miteinander durch eine im wesentlichen Z-förmigen Verbindungsoberfläche verbunden sind, die durch eine erste, von der Achse der Hauptrohrleitung (12) und der Achse ihrer Ableitungsröhre (16) durchquerten Verbindungsoberfläche (36), durch eine zweite, von der Achse der anderen Hauptrohrleitung (14) und der Achse ihrer Ableitungsröhre (18) durchquerte Verbindungsebene (38) und eine dritte Verbindungsoberfläche (40) gebildet wird, welche die beiden ersten verbindet und den Umfang der Hauptrohrleitungen tangiert.

15. Vorrichtung nach Anspruch 14, **dadurch gekennzeichnet, daß** die erste und zweite Verbindungsebene (36, 38) sich zu beiden Seiten bezüglich der Ebene erstreckt, die von den Achsen und den Hauptrohrleitungen (12, 14) durchquert wird, und die Röhrenöffnungen diametral durchläuft.

16. Vorrichtung nach Anspruch 14 oder 15, **dadurch gekennzeichnet, daß** die dritte Verbindungsebene (40) mit der ersten und der zweiten Verbindungsebene (36, 38) einen Winkel einschließt, der größer oder gleich 90° ist.
